# EUROPEAN PATENT SPECIFICATION

(11) **EP 2 312 736 B1**
(45) Date of publication and mention of the grant of the patent: **29.07.2015**
(21) Application number: 10174823.4
(22) Date of filing: 01.09.2010
(51) Int. Cl.: H02M 3/338

(54) **Self-Excited Switching Power Supply Circuit**
Selbsterregte Schaltnetzteilschaltung
Circuit d'alimentation électrique de commutation auto-excité

(30) Priority: 14.10.2009 JP 2009237064
(43) Date of publication of application: 20.04.2011
(73) Proprietor: SMK Corporation, Tokyo 142-8511 (JP)
(72) Inventor: Amei, Toshihiro, Toyama-ken (JP)
(74) Representative: Thompson, Andrew John

(56) References cited:
- EP-A2- 1 489 732
- US-A1- 2004 131 329
- US-B1- 6 314 004

## Description

### Technical Field

The present invention relates to a flyback type self-excited switching power supply circuit which performs constant voltage control on its output voltage, and more particularly to a self-excited switching power supply circuit which changes to an intermittent oscillation operation when no load or a light load is connected to the output.

### Background Art

Switching power supply circuits are used as a stabilized power supply in battery chargers, AC adapters, and the like. The driving methods (switching methods) of the switching elements are broadly classified into a self-excited oscillation method and a separately-excited oscillation method. The self-excited oscillation method includes positive feedback of a voltage that appears on the feedback winding of an inductance component such as a transformer to the control terminal of a switching element as a driving signal for oscillation operation.

In order to stabilize the output voltage to a predetermined set voltage as a stabilized power supply regardless of the magnitude of the load that is connected to the output side, the output voltage between the secondary output lines of the transformer has conventionally been compared with the set voltage. The time for which an exciting current is passed through the transformer (ON operation period) in a single oscillation operation has been controlled on the primary side so as to eliminate the differential voltage, whereby constant voltage control is performed on the output voltage (for example, Patent Document 1).

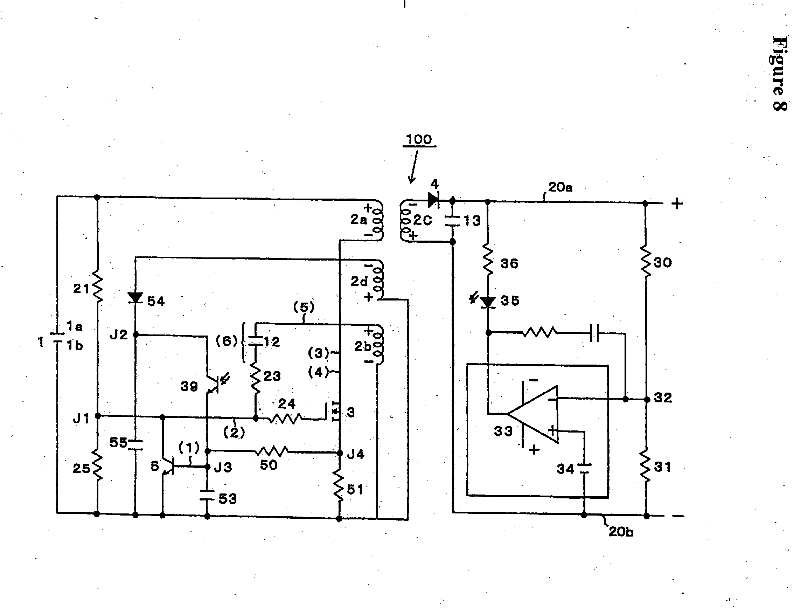

Hereinafter, such a conventional self-excited switching power supply circuit 100 will be described with reference to Figs. 8 to 11. In the diagrams, 1 designates an unstable direct-current power supply which can vary in voltage, 1a a high-voltage side terminal thereof, and 1b a low-voltage side terminal thereof. Designated by 2a is a primary winding of a transformer 2, 2c a secondary output winding of the transformer 2, and 2b and 2d a first feedback winding and a second feedback winding which are arranged on the primary side of the transformer 2, respectively. The first feedback winding 2b is wound in the same direction as that of the primary winding 2a, and the second feedback winding 2b is wound in the reverse direction to that of the primary winding 2a.

Designated by 3 is a field-effect transistor for oscillation (hereinafter, referred to as FET). Designated by 21 is a starting resistor which is used to apply a forward bias (in other words, a gate voltage at or above a threshold voltage V_{TH}) to the gate of the FET 3 upon circuit startup. An electric resistor 25 connected in series with the starting resistor 21 has a smaller resistance than that of the starting resistor 21. The voltage of the direct-current power supply 1 is thereby divided at the junction J1 between the two so that the circuit will not start up when a low direct-current voltage is output.

Designated by 12 is a feedback capacitor which constitutes an ON driving circuit with a feedback resistor 23 and is connected in series between the feedback winding 2b and the gate of the FET 3. Designated by 24 is an electric resistor for suppressing an excessive input to the gate, and 5 an OFF control transistor which is connected at its collector to the gate of the FET 3 and at its emitter to the low-voltage side terminal 1b.

One end of the second feedback winding 2d is connected to the low-voltage side terminal 1b of the direct-current power supply 1 through a rectifier diode 54 and a driving capacitor 55 which are connected in series. The other end thereof is directly connected to the low-voltage side terminal 1b of the direct-current power supply 1, thereby forming a closed loop. The rectifier diode 54 is arranged with the direction of charging of the driving capacitor 55 as the forward direction. The driving capacitor 55 is thus charged with a flyback voltage that appears on the second feedback winding 2d.

The junction J2 between the rectifier diode 54 and the driving capacitor 55 is connected to the base J3 of the OFF control transistor 5 through a photocoupler light-receiving element 39. A controlling capacitor 53 is connected between the base J3 and the low-voltage side terminal 1b.

The base J3 of the OFF control transistor 5 is also connected to the junction J4 between the FET 3 and a shunt resistor 51 through a charge and discharge resistor 50. A voltage across the shunt resistor 51, occurring from the primary winding current flowing through the shunt resistor 51, charges the controlling capacitor 53. When the base voltage of the base J3 reaches the operating voltage of the OFF control transistor 5, the collector and emitter of the OFF control transistor 5 come into conduction.

The photocoupler light-receiving element 39 is optically coupled with a photocoupler light-emitting element 35 on the secondary side of the transformer 2 for operation. When receiving light from the photocoupler light-emitting element 35, the photocoupler light-receiving element 39 passes a current proportional to the received amount of light from the junction J2 to J3.

On the side of the secondary output winding 2c, 4 and 13 respectively designate a rectifying diode and a smoothing capacitor which constitute a rectifier smoothing circuit. The rectifier smoothing circuit rectifies and smoothes the output of the secondary output winding 2c and outputs the resultant to between a high-voltage side output line 20a and a low-voltage side output line 20b.

Voltage dividing resistors 30 and 31 are connected in series between the high-voltage side output line 20a and the low-voltage side output line 20b. An intermediate tap 32 is connected to the inverting input terminal of an error amplifier 30, so that an output detection voltage, a partial voltage of the output voltage, is input to the inverting input terminal. A reference supply 34 is connected between the non-inverting input terminal of the error amplifier 33 and the low-voltage side output line 20b. The reference supply 34 inputs a reference voltage for the output detection voltage to be compared with into the non-inverting input terminal. Since the reference voltage is set to the predetermined set voltage intended for constant voltage control between the high-voltage side output line 20a and the low-voltage side, divided by the voltage dividing resistances 30 and 31, the output value of the error amplifier 33 indicates the differential voltage of the output voltage to the set voltage.

The output side of the error amplifier 33 is connected with the photocoupler light-emitting element 35 which is connected to the high-voltage side output line 20a through an electric resistor 36 and turns on and off depending on the output value of the error amplifier 33. Consequently, the photocoupler light-emitting element 35 emits light by an amount corresponding to the differential voltage. The photocoupler light-receiving element 39 on the primary side, optically coupled with the photocoupler light-emitting element 35, passes a current corresponding to the differential voltage from the junction J2 to J3.

In the self-excited switching power supply circuit 100 of such configuration, when a direct-current voltage is initially applied to the high-voltage side terminal 1a and the low-voltage side terminal 1b of the power supply 1, the feedback capacitor 12 is charged through the starting resistor 12 (in the diagram, with the upper electrode positive and the lower electrode negative) and the charge voltage of the feedback capacitor 12 increases gradually. When the charge voltage of the feedback capacitor 12 reaches the threshold voltage V_{TH}, the forward bias voltage is applied to gate of the FET 3, whereby the FET 3 is turned on (the drain and source come into conduction).

### (Conventional Operation When a Load of Rated Power Consumption is Connected)

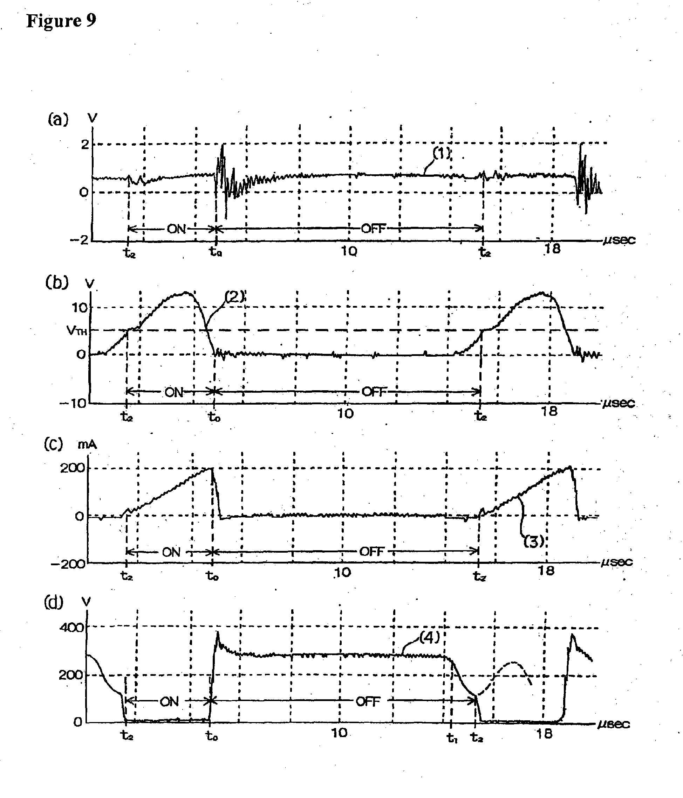

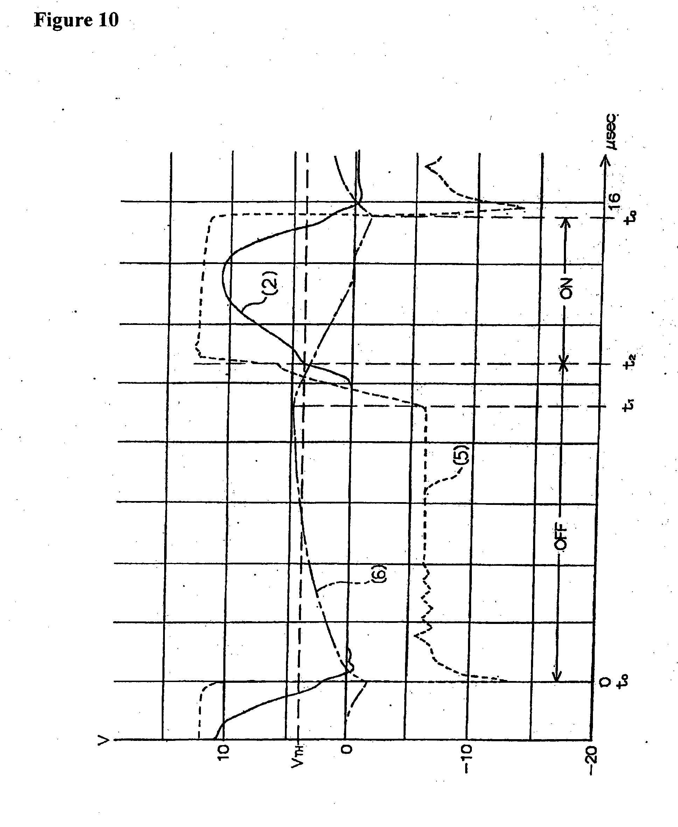

Hereinafter, a self-excited oscillation operation when a load of rated power consumption is connected between the output lines 20a and 20b will be described with reference to Figs. 9 and 10. Figs. 9 and 10 show the operation waveforms of the parts shown by (1) to (6) of Fig. 8 when the direct-current power supply 1 having a power supply voltage of 200 V is applied to the conventional self-excited switching power supply circuit 100 shown in Fig. 8 for self-excited oscillations, where the starting resistor 21 and the electric resistor 25 have respective resistances of 1.5 MΩ and 100 kΩ, the feedback capacitor 12 has a capacitance of 0.01 µF, and the feedback resistor 23 has a resistance of 100 Ω.

When the FET 3 turns on and an exciting current starts to flow through the serially-connected primary winding 2a from the direct-current power supply 1, an induced electromotive force occurs in each of the windings of the transformer 2 (see the voltage waveform of the first feedback winding 2b which is shown by (5) between t₂ and t₀ of Fig. 10). This accumulates exciting energy in the transformer 2. Here, the current flowing through the primary winding 2a produces a voltage at the junction J4 on the FET-3 side of the shunt resistor 51, and the voltage charges the controlling capacitor 53 through the charge and discharge resistor 50. The current flowing through the primary winding 2a increases nearly linearly with time after turn-on. Consequently, the charge voltage of the controlling capacitor 53 reaches the operating voltage of the OFF control transistor 5 (to in Fig. 9(a)), and the collector and emitter come into conduction. The gate of the FET 3 is substantially short-circuited by the OFF control transistor 5, so that the FET 3 turns off.

When the FET 3 turns off to substantially interrupt the current flowing through the transformer, a so-called flyback voltage (induced counterelectromotive force) occurs in each of the windings (to to t₁ in Fig. 9(d)). Here, the flyback voltage occurring in the secondary output winding 2c is rectified and smoothed by the smoothing rectifier circuit which is composed of the rectifying diode 4 and the capacitor 13, and is output as power to be supplied to the load that is connected between the output lines 20a and 20b.

Meanwhile, the flyback voltage occurring in the first feedback winding 2b is in proportion to a flyback voltage that occurs in the secondary winding 2c from the load connected to the output side. The flyback voltage occurring in the feedback winding 2b ((5) between t₀ and t₁ of Fig. 10) charges the feedback capacitor 12 ((6) between t₀ and t₁ of Fig. 10, with the lower electrode being positive and the upper electrode being negative in Fig. 8).

In a state where a load of rated power consumption is connected and the output voltage between the high-voltage side output line 20a and the low-voltage side output line 20b, which is obtained by rectifying and smoothing the flyback voltage occurring in the secondary winding 2c, does not reach a set voltage that is determined by the reference voltage of the reference supply 34 (hereinafter, referred to as transient state), the photocoupler light-emitting element 35 does not emit light. Consequently, a discharge current flows from the controlling capacitor 53 through the charge and discharge resistor 50 and the shunt resistor 51, so that the charge voltage, i.e., the base voltage of the OFF control transistor 5 falls to or below the operating voltage. Since the base to collector of the OFF control transistor 5 function as an equivalent diode, the feedback capacitor 12 is charged from the first feedback winding 2b with the shunt resistor 51, the charge and discharge resistor 50, the base to collector of the OFF control transistor 5, and the feedback resistor 23 as a charge current path.

When the electric energy accumulated in the secondary output winding 2c by the induced counterelectromotive force is fully released (time t₁), the flyback voltage of the feedback winding 2b, which has been acting on the gate as a reverse bias, falls ((5) between t₁ and t₂ of Fig. 10). The charge voltage retained so far in the feedback capacitor 12 ((6) of Fig. 10) makes the gate voltage of the FET 3 exceed the threshold voltage V_{TH} (t₂ of (2) in Figs. 9(b) and 10), whereby the FET 3 is turned on again. A series of oscillation operations are repeated in this way.

Now, the energy accumulated in the transformer 2 in a single oscillation cycle is almost proportional to the square of the ON operation period of the FET 3, i.e., that of the time from turn-on (t2) to when the base voltage of the OFF control transistor 5 reaches the operating voltage (t0). In the transient state where the output voltage on the secondary side does not reach the set voltage, the photocoupler light-emitting element 35 emits no light and makes no contribution to the charge rate of the controlling capacitor 53. The operation is thus made in a maximum ON time which is determined by the resistance of the shunt resistor 51. The maximum ON time is set so that the energy accumulated in the transformer 2 becomes slightly higher than the sum of energy that is consumed by the load of rated power consumption and the switching operation of the self-excited switching power supply circuit 100. The output voltage therefore increases each time the oscillation up to the set voltage is repeated. When the set voltage is exceeded, a normal continuous self-excited oscillation operation under constant voltage output control is entered.

If the output voltage between the high-voltage side output line 20a and the low-voltage side output line 20b exceeds the set voltage, the photocoupler light-emitting element 35 emits light by an amount corresponding to the differential voltage. The optically-coupled photocoupler light-receiving element 39 passes a current proportional to the differential voltage from the junction J2 to the junction J3.

When the second feedback winding 2d has a flyback voltage in the OFF operation period of the FET 3, the driving capacitor 55 is charged with the flyback voltage through the rectifier diode 54. A charge current for charging the controlling capacitor 53, proportional to the differential voltage, also flows through the photocoupler light-receiving element 39, so that the controlling capacitor 53 maintains the base voltage at or above the operating voltage.

If the load's power consumption lowers the output voltage to or below the set voltage before t1 when the energy accumulated in the transformer 2 disappears, the photocoupler light-emitting element 35 turns off to disconnect the junctions J2 and J3. A discharge current flows from the controlling capacitor 53 through the charge and discharge capacitor 50 and the shunt resistor 51. The base voltage of the OFF control transistor 5 falls to or below the operating voltage, and the collector and emitter are disconnected from each other. Consequently, as described above, the charge voltage retained in the feedback capacitor 12 makes the gage voltage of the FET 3 exceed the threshold voltage V_{TH} to turn on the FET 3 at the timing when the flyback voltage of the feedback winding 2b drops (t₂).

In the ON operation period where the FET 3 is turned on, the voltage occurring on the shunt resistor 51 charges the controlling capacitor 53 through the charge and discharge resistor 50. A charge current also flows into the controlling capacitor 53 from the driving capacitor 55 which is charged with the flyback voltage occurring in the second feedback winding 2d during the OFF operation period. This accelerates the charging of the controlling capacitor 53, and the base voltage of the OFF control transistor 5 reaches the operating potential before the set maximum ON time.

As a result, the gate of the FET 3 and the low-voltage side terminal 1b are substantially short-circuited by the OFF control transistor 5, so that the FET 3 is turned off immediately after turned on. This consequently reduces the ON time in a single oscillation cycle and decreases the energy accumulated in the transformer 2, with a drop in the output voltage. Constant voltage control is performed on the output voltage through such a process.

### (Conventional Standby Operation without a Load)

Now, in a no-load situation where no load is connected between the output lines 20a and 20b, and when a light load is connected, the energy consumption on the output side is small. The ON operation period for accumulating energy in the transformer 2 is thus short, and the time to t1 where the energy disappears is also short. With no constant voltage control, a single oscillation cycle is short. Since there is no or only a small power consumption due to load, the output voltage is at or above the set voltage even at the point in time when the energy accumulated in the transformer 2 disappears (t1).

As a result, the photocoupler light-emitting element 35 emits light. Even at the point in time when the flyback voltage on the second feedback winding 2d disappears and the FET 3 should be turned on in a normal continuous self-excited oscillation operation (t2), the FET 3 will not be turned on since a charge current for charging the controlling capacitor 53 flows from the driving capacitor 55 through the photocoupler light-receiving element 39 and the base voltage is maintained at or above the operating voltage. When the output voltage falls subsequently, a discharge current flows from the controlling capacitor 53 through the charge and discharge capacitor 53 and the shunt resistor 51. The base voltage of the OFF control transistor 5 falls to or below the operating voltage, and the FET 3 is turned on late.

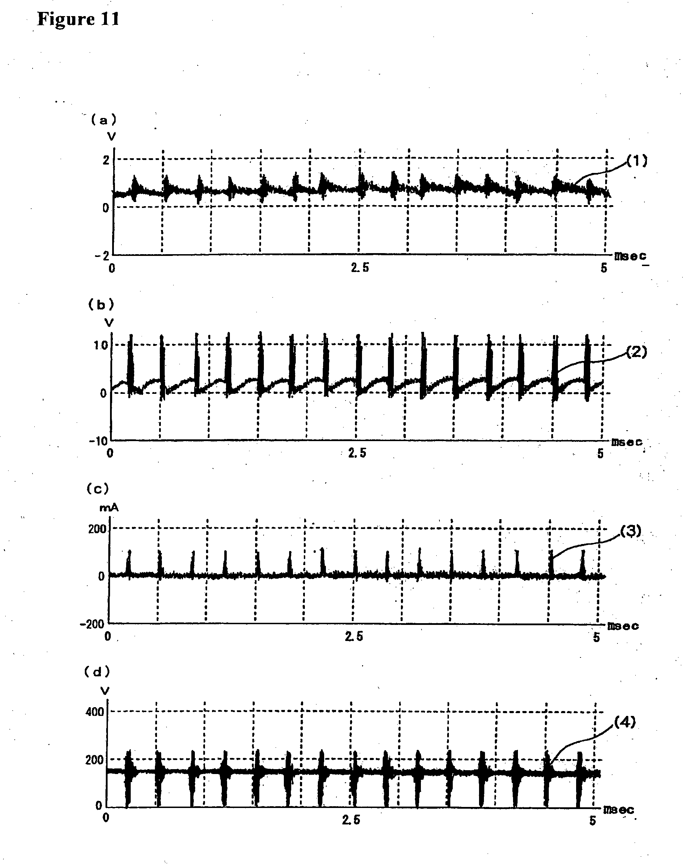

That is, the self-excited switching power supply circuit 100 performs intermittent oscillation operations with an extended OFF operation period as shown in Fig. 11. This reduces the energy loss attributable to switching per unit time and suppresses the power loss when on standby without a load or under a light load.

Patent Document 2 discloses a switching power source in which the voltage error of a secondary side DC output is fed back to a switching circuit through an insulating element, therefore stabilising the output voltage.

### Citation List

[Patent Document 1] Japanese Patent No. 3691498 (paragraphs 0033 to 0066 of the description, and Fig. 1)
[Patent Document 2] US Patent No. 6314004 B1

### Summary of the Invention

### Problems to be Solved by the Invention

As described above, with the conventional self-excited switching power supply circuit 100, it is desired that the next turn-on of the FET 3 be postponed as far as possible after the disappearance of the energy accumulated in the transformer 2 on standby without a load or under a light load, thereby extending the intermittent oscillation cycles to reduce the energy loss from switching.

The time to turn on can be postponed by increasing the resistance of the charge and discharge resistor 50 or the shunt resistor 51 to lower the discharge rate of the controlling capacitor 53. The shunt resistor 51, however, has an unchangeable resistance of around 2.4 Ω since the resistance is determined by the primary winding current, which determines the maximum ON time, and the operating potential of the OFF control transistor 5. The charge and discharge resistor 50 conventionally has a low resistance of around 100 Ω because increasing the resistance reduces the charge rate of the controlling capacitor 53 when charged with the voltage of the shunt resistor 51 after turn-on, making it impossible to perform a turn-off control with a quick response to the primary winding current which increases nearly linearly with the elapsed time. In particular, the energy accumulated in the transformer 2 is almost proportional to the square of the elapsed time. If the charge and discharge resistor 50 has a high resistance and the energy occurring in a single oscillation cycle increases in proportion to the square of the postponed turn-off time, it is impossible to lower the output voltage sufficiently once the output voltage rises beyond the set voltage.

It has therefore been impossible to reduce the number of times of switching and reduce the power loss by further extending the intermittent oscillation cycles on standby without a load or under a light load.

The present invention has been achieved in view of the foregoing problems, and it is thus an object thereof to provide a self-excited switching power supply circuit which is quick to respond to an increase in the primary winding current, is easy to perform constant voltage control, and has extended intermittent oscillation cycles on standby without a load or under a light load for suppressed power loss.

### Means for Solving the Problems

To achieve the foregoing object, a self-excited switching power supply circuit according to claim 1 comprises: a transformer that has a primary winding, a secondary output winding, and at least one or more feedback windings; a field-effect transistor for oscillation that is connected to a direct-current power supply so as to be in series with the primary winding, and makes an ON operation while its gate voltage is at or above a threshold voltage V_{TH}; a starting resistor that is connected between a high-voltage side terminal of the direct-current power supply and a gate of the field-effect transistor; an ON driving circuit that includes a feedback capacitor and a feedback resistor which are connected in series between the feedback winding(s) and the gate of the field-effect transistor; a driver element that is connected between the gate of the field-effect transistor and a low-voltage side terminal of the direct-current power supply, and brings the gate and the low-voltage side terminal into conduction to make the field-effect transistor perform an OFF operation while its control terminal voltage is at or above an operating voltage; a shunt resistor that is connected between the field-effect transistor and the low-voltage side terminal; a discharge resistor that is connected between a control terminal of the driver element and a junction between the field-effect transistor and the shunt resistor; a controlling capacitor that is connected between the control terminal of the driver element and the low-voltage side terminal directly without any element connected in parallel to the controlling capacitor, is charged to raise the control terminal voltage to or above the operating voltage with a voltage of the shunt resistor through which an exciting current of the primary winding flows in an ON operation period, and is discharged only through the discharge resistor and the shunt resistor to lower the control terminal voltage below the operating voltage in an OFF operation period; and a constant voltage control circuit that compares an output voltage with a predetermined set voltage, and passes a charge current for charging the controlling capacitor from any one of the windings of the transformer where a flyback voltage occurs or the driving capacitor charged with a flyback voltage according to a differential voltage between the output voltage and the set voltage if the output voltage exceeds the set voltage, the output voltage being obtained by rectifying and smoothing a flyback voltage occurring in the secondary output winding of the transformer;
after the field-effect transistor is turned on and while the output voltage is higher than the set voltage, a charge voltage of the driving capacitor being applied to the control terminal to which the voltage of the shunt resistor the exciting current of the primary winding is flowing through is applied, whereby the ON operation period before the driver element turns off the field-effect transistor is reduced; after the field-effect transistor is turned off and while the output voltage is higher than the set voltage, the controlling capacitor being charged from any one of the windings of the transformer where a flyback voltage occurs or the driving capacitor so that the control terminal voltage is maintained at or above the operating voltage, whereby turning-on of the field-effect transistor is suppressed to extend the OFF operation period;
wherein a switching diode is connected between the control terminal of the driver element and a junction between the field-effect transistor and the shunt resistor so as to be in parallel with the discharge resistor with its forward direction from the junction to the control terminal, the controlling capacitor being charged through the switching diodeby the voltage at the field-effect transistor side of the shunt resistor, such that the charge voltage of the controlling capacitor increases with a quick response to the current increase of the primary winding.

When no load or a light load is connected, the discharge resistor having a high resistance is used to lower the discharge rate of the control capacitor in the OFF operation period, so that the control terminal voltage of the driver element is maintained at or above the operating potential. The result is an intermittent oscillation operation in which the disappearance of the energy accumulated in the transformer is not followed by turn-off. This precludes short switching cycles and reduces the energy loss from switching.

Although the discharge resistor of high resistance is used, the charge current for charging the controlling capacitor with the voltage of the shunt resistor flows through the switching diode after the field-effect transistor for oscillation is turned on. The control terminal voltage of the driver element reaches or exceeds the operating potential to turn off the field-effect transistor for oscillation with a quick response to the primary winding current which increases with the elapsed time.

A self-excited switching power supply circuit of clam 2 is characterized in that the resistance of the discharge resistor is set so that the charge voltage of the controlling capacitor falls below the operating voltage when energy accumulated in the transformer is released from the secondary output winding and the feedback winding(s) freely oscillating reaches a first maximum value in voltage, with a load of rated power consumption connected to the secondary output winding.

When the voltage of the feedback winding(s) reaches the first maximum value with the load of rated power consumption connected, the voltage acting on the field-effect transistor for oscillation becomes the minimum. At such timing, the charge voltage of the controlling capacitor falls below the operating voltage so that the field-effect transistor for oscillation turns on with less switching noise and less switching loss.

When the voltage of the feedback winding(s) reaches the first maximum value with the load of rated power consumption connected, the charge voltage of the controlling capacitor falls below the operating voltage, and the field-effect transistor for oscillation becomes capable of being turned on by the ON driving circuit. A continuous self-excited oscillation operation can thus be made according to the load's power consumption.

Since the upper limit of the resistance of the discharge resistor is set so as to allow a continuous self-excited oscillation operation with the load of rated power consumption connected, an intermittent oscillation operation is made at maximum cycles when no load or a light load is connected.

A self-excited switching power supply circuit of clam 3 is characterized in that: the driver element is an NPN transistor that is connected at its collector to the gate of the field-effect transistor for oscillation, at its emitter to the low-voltage side terminal, and at its base to the control terminal; and the feedback capacitor to be charged with the flyback voltage occurring in the feedback winding(s) of the transformer is charged with a charge current that flows through the switching diode and the base to collector of the NPN transistor in the OFF operation period.

The feedback capacitor is charged with the flyback voltage occurring in the feedback winding(s) of the transformer in the OFF operation period, without the provision of an additional charging path.

The feedback capacitor is charged through the switching diode of low impedance without the intervention of the discharge resistor. The charge voltage that makes the gate voltage higher than or equal to the threshold voltage can be thus obtained by the time when the feedback winding(s) reverses/reverse its/their polarity and turn-on becomes possible even if the discharge resistor has a high resistance.

### Effects of the Invention

According to the invention of claim 1, a resistor having a high resistance is used as the discharge resistor so that an intermittent oscillation operation of extended OFF operation period can be made to reduce the energy loss from switching when no load or a light load is connected. Even with the use of the resistor of high resistance as the discharge resistor, turn-off control can be performed without delay in response to the primary winding current which increases nearly linearly with the elapsed time after turn-on. When the output voltage rises beyond the set voltage, it is therefore possible to quickly reduce the ON operation period for constant voltage control.

According to the invention of claim 2, when a load of rated power consumption is connected, a continuous self-excited oscillation operation corresponding to the load's power consumption can be performed to make oscillation operations with less switching noise and less switching loss.

When no load or a light load is connected under the condition that a continuous self excited oscillation operation should be made with a load of rated power consumption connected, an intermittent oscillation operation can be perform at maximum cycles so as to maximize the efficiency on standby without a load or under a light load.

According to the invention of claim 3, the feedback capacitor of the ON driving circuit can be charged in the OFF operation period without the provision of a charging path for charging the feedback capacitor.

Even if the discharge resistance has a high resistance, a charge voltage that makes the gate voltage higher than or equal to the threshold voltage can be obtained by the time when the feedback winding(s) reverses its polarity and turn-on becomes possible.

### Brief Description of the Drawings

Fig. 1 is a circuit diagram of a self-excited switching power supply circuit 10 according to an embodiment of the present invention;
Fig. 2 is a waveform chart showing the waveforms of various parts of the self-excited switching power supply circuit 10 that is connected with a load of rated power consumption and is making a continuous self-excited oscillation operation,
Fig. 2(a) showing the waveform of the base voltage (1) of an OFF control transistor 5,
Fig. 2(b) showing the waveform of the gate voltage (2) of an FET 3,
Fig. 2(c) showing the waveform of the drain current (3) of the FET 3,
Fig. 2(d) showing the waveform of the drain voltage (4) of the FET 3;
Fig. 3 is an enlarged waveform chart showing the waveform of the gate voltage (2) of the FET 3, the waveform of the voltage (5) of a terminal of a feedback capacitor 12 on the side of a first feedback winding 2b, and the waveform of the charge voltage (6) of the feedback capacitor 12 in the self-excited switching power supply circuit 10 that is connected with the load of rated power consumption and is making a continuous self-excited oscillation operation;
Fig. 4 is a waveform chart showing the waveforms of various parts of the self-excited switching power supply circuit 10 that is making an intermittent oscillation operation without a load,
Fig. 4(a) showing the waveform of the base voltage (1) of the OFF control transistor 5,
Fig. 4(b) showing the waveform of the gate voltage (2) of the FET 3,
Fig. 4(c) showing the waveform of the drain current (3) of the FET 3,
Fig. 4(d) showing the waveform of the drain voltage (4) of the FET 3;
Fig. 5 is an enlarged waveform chart showing the waveform of the gate voltage (2) of the FET 3, the waveform of the voltage (5) of the terminal of the feedback capacitor 12 on the side of the first feedback winding 2b, and the waveform of the charge voltage (6) of the feedback capacitor 12 in the self-excited switching power supply circuit 10 that is making an intermittent oscillation operation without a load;
Fig. 6 is a waveform chart showing the waveforms of the respective parts of Fig. 4 in a longer time span;
Fig. 7 is a waveform chart showing the power loss Pin of the self-excited switching power supply circuit 10 with respect to the input voltage Vin with different resistances of a discharge resistor 52;
Fig. 8 is a circuit diagram of the conventional self-excited switching power supply circuit 100;
Fig. 9 is a waveform chart showing the waveforms of various parts of the conventional self-excited switching power supply circuit 100 that is connected with a load of rated power consumption and is making a continuous self-excited oscillation operation,
Fig. 9(a) showing the waveform of the base voltage (1) of the OFF control transistor 5,
Fig. 9(b) showing the waveform of the gate voltage (2) of the FET 3,
Fig. 9(c) showing the waveform of the drain current (3) of the FET 3,
Fig. 9(d) showing the waveform of the drain voltage (4) of the FET 3;
Fig. 10 is an enlarged waveform chart showing the waveform of the gate voltage (2) of the FET 3, the waveform of the voltage (5) of the terminal of the feedback capacitor 12 on the side of the first feedback winding 2b, and the waveform of the charge voltage (6) of the feedback capacitor 12 in the conventional self-excited switching power supply circuit 100 that is connected with the load of rated power consumption and is making a continuous self-excited oscillation operation;
Figs. 11(a) to 11(d) are waveform charts showing the waveforms of the respective parts in Fig. 9 of the conventional self-excited switching power supply circuit 100 that is making an intermittent oscillation operation without a load, in the same time span as in Fig. 6.

### Mode for Carrying Out the Invention

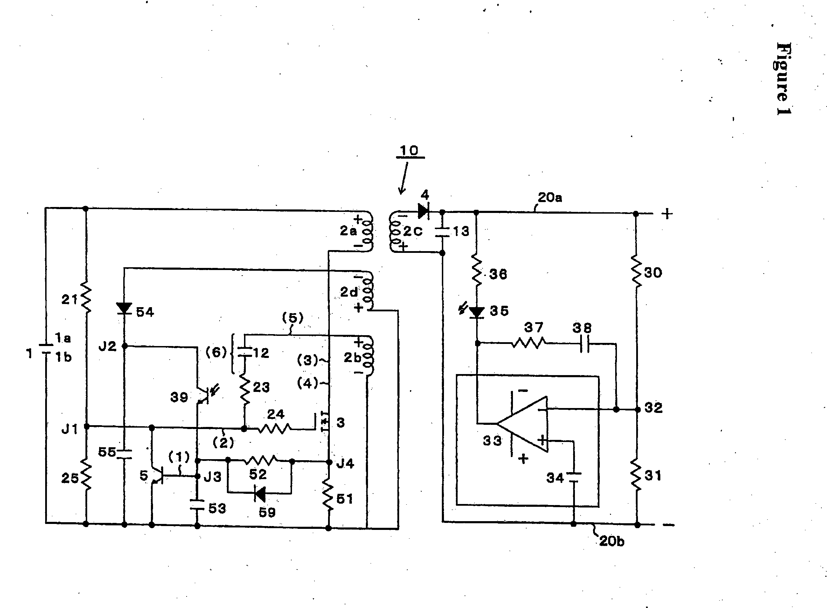

Hereinafter, an embodiment of the present invention will be described in detail with reference to Figs. 1 to 7. Fig. 1 is a circuit diagram showing the configuration of a self-excited switching power supply circuit 10 according to the embodiment of the present invention. Main circuitry and circuit elements of the self-excited switching power supply circuit 10 according to the present embodiment are common to the conventional self-excited switching power supply circuit 100 shown in Fig. 8. The same components will thus be designated by like reference numerals, and a description thereof will be omitted.

As shown in Fig. 1, a transformer 2 has on its primary side a primary winding 2a, a first feedback winding 2b which is wound in the same direction as that of the primary winding 2a, and a second feedback winding 2d which is wound in the reverse direction to that of the primary winding 2a, and on its secondary side a secondary output winding 2c.

The primary winding 2a is connected to a direct-current power supply 1 so as to be in series with a field-effect transistor for oscillation (hereinafter, referred to as FET) 3. The current to flow through the primary winding 2a is controlled on/off by the ON/OFF operation of the FET 3. The FET 3 here is a MOSFET, which is connected at its drain to the primary winding 2a and at its source to a low-voltage side terminal 1b of the direct-current power supply 1 through a shunt resistor 51 for detecting the primary winding current.

The gate of the FET 3 is connected to a junction J1 between a starting resistor 21 and an electric resistor 25 which are connected in series with the direct-current power supply 1, through an electric resistor 24 for suppressing an excessive input to the gate. As with the circuit shown in Fig. 8, the starting resistor 21 and the electric resistor 25 have resistances of 1.5 MΩ and 100 kΩ, respectively. This makes the gate voltage of the FET 3 fall below the threshold voltage V_{TH} to preclude a self-excited oscillation operation when the power supply voltage of the unstable direct-current power supply 1 of around 200 V drops significantly.

A feedback capacitor 12 and a feedback resistor 23, which constitute an ON driving circuit, are connected in series between the junction J1 and the first feedback winding 2b. The other side of the first feedback winding 2b is connected to the low-voltage side terminal 1b of the direct-current power supply 1. Here, the feedback capacitor 12 and the feedback resistor 23 have a capacitor of 1000 pF and a resistor of 4.7 kΩ. The multiplied time constant is adjusted so that the gate voltage of the FET 3 exceeds the threshold voltage V_{TH} when the first feedback winding 2b starts free oscillations and its voltage reaches a first maximum value in reverse polarity in a continuous self-excited oscillation operation to be described later.

An OFF control transistor 5 which functions as a driver element for lowering the gate voltage of the FET 3 for OFF control is arranged between the low-voltage side terminal 1b and the junction J1 between the starting resistor 21 and the electric resistor 25. Here, the OFF control resistor 5 is made of an NPN transistor which is connected at its collector to the junction J1 and at its emitter to the low-voltage side terminal 1b.

One end of the second feedback winding 2d is connected to the low-voltage side terminal 1b of the direct-current power supply 1 through a rectifier diode 54 and a driving capacitor 55 which are connected in series. The other end thereof is directly connected to the low-voltage side terminal 1b of the direct-current power supply 1, thereby forming a closed loop. The rectifier diode 54 is arranged with its forward direction from the second feedback winding 2d to the driving capacitor 55, so that the driving capacitor 55 is charged with a flyback voltage that appears in the second feedback winding 2d.

The junction J2 between the rectifier diode 54 and the driving capacitor 55 is connected to the low-voltage side terminal 1b through a photo coupler light-receiving element 39 and a controlling capacitor 53. The serial junction J3 between the photocoupler light-receiving element 39 and the controlling capacitor 53 is connected to the base of the OFF control transistor 5. The photocoupler light-receiving element 39 is optically coupled with a photocoupler light-emitting element 35 on the secondary side of the transformer 2 for operation. When receiving light from the photocoupler light-emitting element 35, the photocoupler light-receiving element 39 passes a current proportional to the received amount of light from the junction J2 to J3.

The serial junction J3, i.e., the base of the OFF control transistor 5 is connected to a junction J4 between the FET 3 and the shunt resistor 51 through a discharge resistor 52 and a switching diode 59 which are connected in parallel with each other. The forward direction of the switching diode 59 is from the junction J4 to the serial junction J3. When the primary winding current flows through the shunt resistor 51, the controlling capacitor 53 is thus charged with the resulting voltage drop through the switching diode 59. If the primary winding current increases and the voltage drop across the shunt resistor 51 reaches or exceeds a certain value, the base voltage reaches the operating potential of the OFF control transistor 5, whereby the collector and emitter of the OFF control transistor 5 are brought into conduction. On the other hand, if the voltage drop across the shunt resistor 51 falls below the charge voltage of the controlling capacitor 53, the discharge current of the controlling capacitor 53 flows through the discharge resistor 52 and the shunt resistor 51. In the present embodiment, the discharge resistor 52, which corresponds to the charge and discharge resistor 50 of 100 Ω in the conventional self-excited switching power supply circuit 100, has a resistance of 4.7 kΩ so as to reduce the charge rate of the controlling capacitor 53.

The secondary output winding 2c of the transformer is connected with a rectifying diode 4 which is in series with the secondary output winding 2c, and a smoothing capacitor 13 which is in parallel with the secondary output winding 2c. This constitutes a rectifier smoothing circuit on the output side. Voltage dividing resistors 30 and 31 are connected in series between a high-voltage side output line 20a and a low-voltage side output line 20b of the rectifier smoothing circuit. An intermediate tap 32 is connected to the inverting input terminal of an error amplifier 30, thereby inputting an output detection voltage which is a partial voltage of the output voltage. A reference supply 34 is connected between the non-inverting input terminal of the error amplifier 33 and the low-voltage side output line 20b. The reference supply 34 inputs a reference voltage for the output detection voltage to be compared with into the non-inverting input terminal. In the diagram, 37 and 38 designate alternating-current negative feedback elements that are connected in series between the intermediate tap 32 and the non-inverting output terminal of the error amplifier 33.

The self-excited switching power supply circuit 10 performs constant voltage control so that the output voltage between the high-voltage side output line 20a and the low-voltage side output line 20b becomes a predetermined set voltage regardless of the magnitude of the load that is connected between the high-voltage side output line 20a and the low-voltage side output line 20b. The foregoing reference voltage indicates the set voltage divided by the voltage dividing resistors 30 and 31, so that the error amplifier 33 outputs an output value that is proportional to the differential voltage of the output voltage to the set voltage.

A photocoupler light-emitting element 35 which emits light by an amount according to the output value of the error amplifier 33 is connected between the output of the error amplifier 33 and the high-voltage side output line 20a, so as to be in series with an electric resistor 36. The photocoupler light-receiving element 39 on the primary side, optically coupled with the photocoupler light-emitting element 35, then receives the light emitted by the amount corresponding to the differential voltage, and passes a current corresponding to the differential voltage from the junction J2 to J3. That is, if the output voltage between the high-voltage side output line 20a and the low-voltage side output line 20b reaches or exceeds the set voltage, a current flows from the junction J2 to J3 with an allowable current according to the difference. Below the set voltage, the junctions J2 and J3 are disconnected from each other.

As described above, in this self-excited switching power supply circuit 10, a constant voltage control circuit is composed of the error amplifier 33 which compares the output voltage and the set voltage, the photocoupler light-emitting element 35 which is connected to the output of the error amplifier 33, and the photocoupler light-receiving element 39 which is optically coupled with the photocoupler light-emitting element 35. This constant voltage control circuit is used to compare the output voltage with a predetermined set voltage and passes a charge current for charging the controlling capacitor 53 from the second feedback winding where a flyback voltage occurs or the driving capacitor 55 according to the differential voltage between the output voltage and the set voltage if the output voltage exceeds the set voltage.

### (Operation When a Load of Rated Power Consumption is Connected)

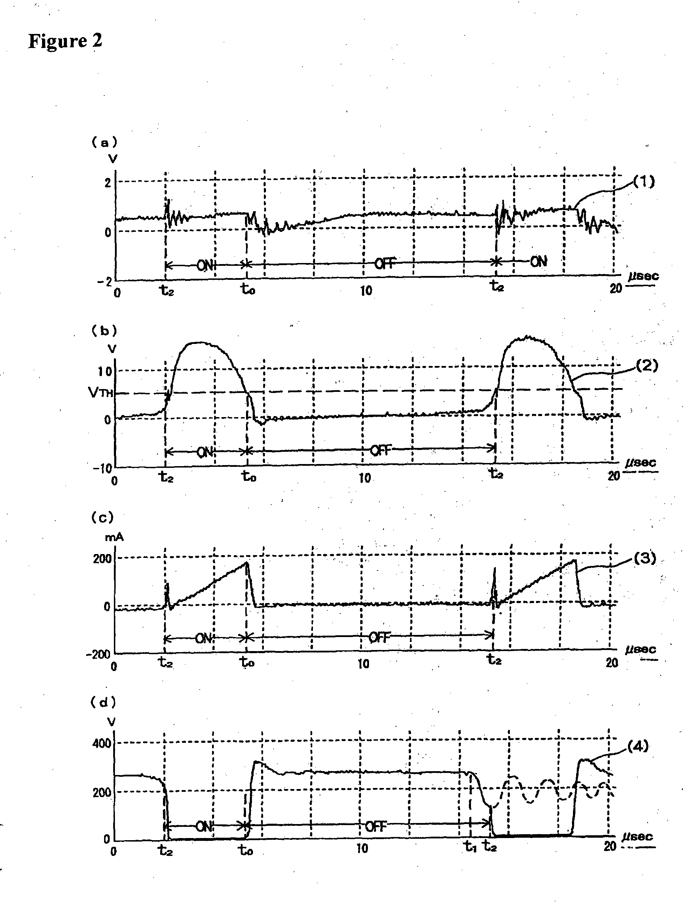

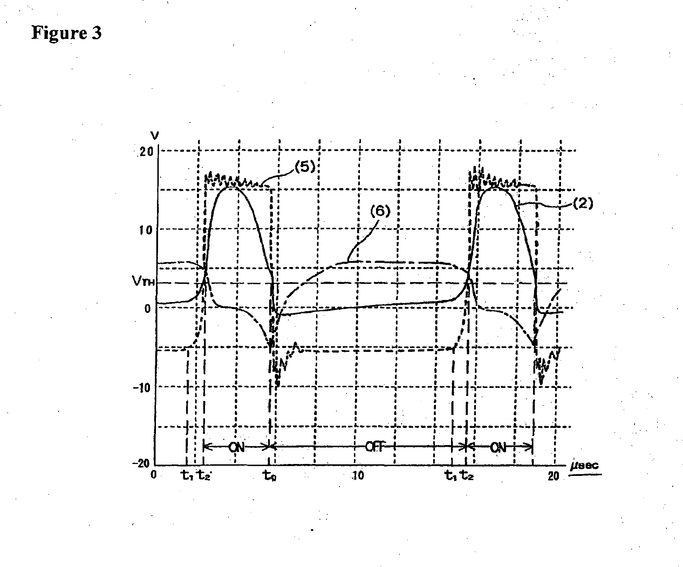

Referring to Figs. 1 to 3, the operation of the self-excited switching power supply circuit 10 of such configuration will initially be described for situations when a load of rated power consumption is connected between the high-voltage side output line 20a and the low-voltage side output line 20b. Figs. 2 and 3 both show the waveforms of various parts (1) to (4) of Fig. 1 when a load of rated power consumption is connected for continuous self-excited oscillation operation. Fig. 2(a) shows the voltage of the serial connection J3, i.e., the waveform of the base voltage (1) of the OFF control transistor 5; Fig. 2(b) the waveform of the gate voltage (2) of the FET 3; Fig. 2(c) the drain current of the FET 3, i.e., the waveform of the primary winding current (3) that flows through the primary winding 2a; and Fig. 2(d) the drain voltage of the FET 3, i.e., the waveform of the voltage (4) on one side of the primary winding 2a. The voltage waveforms designated by (2), (5), and (6) of Fig. 3 are: the waveform of the gate voltage (2) of the FET 3; the waveform of the voltage (5) of the feedback capacitor 12 on the side of the first feedback winding 2b; and the waveform of the charge voltage (6) of the feedback capacitor 12 with respect to the voltage on the side of the first feedback winding 2b.

When a direct-current voltage of around 200 V occurs between the high-voltage side terminal 1a and the low-voltage side terminal 1b of the direct-current power supply 1, the power supply voltage divided to 1/16 by the starting resistor 21 and the electric resistor 25 charges the feedback capacitor 12 through the starting resistor 21 and the feedback resistor 23 (with the lower electrode being positive and the upper electrode being negative in the diagram). When the charge voltage of the charged feedback capacitor 12 gradually increases to reach the threshold voltage V_{TH} of the FET 3, the forward bias voltage is applied to the gate of the FET 3. The FET 3 is turned on, and the drain and source come into conduction.

When the FET 3 is turned on and an exciting current starts to flow through the serially-connected primary winding 2a from the direct-current power supply 1, an induced electromotive force occurs in each of the windings of the transformer 2 and energy is accumulated in the transformer 2. The induced voltage occurring in the feedback winding 2b ((5) between t₂ and t₀ of Fig. 3) is superposed on the charge voltage of the feedback capacitor 12 ((6) of Fig. 3), whereby the gate voltage of the FET 3 ((2) of Figs. 2(b) and 3) is maintained to a voltage (ON voltage) at or above the threshold voltage V_{TH}.

Here, the current flowing through the primary winding 2a produces a voltage at the junction J4 on the FET-3 side of the shunt resistor 51, and the voltage charges the controlling capacitor 53 through the switching diode 59. The current flowing through the primary winding 2a increases nearly linearly with the time after turn-on. The charge voltage of the controlling capacitor 53 also increases with a quick response to the current increase of the primary winding 2a.

When the OFF control transistor 5 reaches its bias voltage (operating voltage), the collector and emitter come into conduction. The gate of the FET 3 is substantially short-circuited by the OFF control transistor 5 (here, to the potential of the low-voltage side terminal 1b, such as 0 V), and the FET 3 turns off. When the FET 3 turns off to substantially interrupt the current flowing through the transformer 2, a so-called flyback voltage (induced counterelectromotive force) occurs in each of the windings (to to t₁ in Fig. 2(d)). Here, the flyback voltage occurring in the secondary output winding 2c is rectified and smoothed by the smoothing rectifier circuit which is composed of the rectifying diode 4 and the capacitor 13, and is output as power to be supplied to the load that is connected between the output lines 20a and 20b.

Meanwhile, the flyback voltage occurring in the first feedback winding 2b is in proportion to a flyback voltage that occurs in the secondary winding 2c from the load connected to the output side. The flyback voltage occurring in the first feedback winding 2b ((5) between t₀ and t₁ of Fig. 3) charges the feedback capacitor 12 ((6) between t₀ and t₁ of Fig. 3, with the lower electrode being positive and the upper electrode being negative in Fig. 1), which leads to the next turn-on of the FET 3.

In a state where the output voltage between the high-voltage side output line 20a and the low-voltage side output line 20b, which is obtained by rectifying and smoothing the flyback voltage occurring in the secondary winding 2c, does not reach a set voltage that is determined by the reference voltage of the reference supply 34 (hereinafter, referred to as transient state), the photocoupler light-emitting element 35 does not emit light. This disconnects the junctions J2 and J3 from each other. Since the primary winding current does not flow through the shunt resistor 51, a discharge current flows from the controlling capacitor 53 through the discharge resistor 52 and the shunt resistor 51, and the base voltage of the OFF control transistor 5 falls to or below the bias voltage. Although the base voltage of the OFF control transistor 5 falls to or below the bias voltage in the OFF operation period of the FET 3 (between t0 and t2 of Fig. 2; hereinafter, referred to as OFF operation period), the base to collector function as an equivalent diode. The feedback capacitor 12 is thus charged with the flyback voltage that occurs in the first feedback winding 2b with the shunt resistor 51, the switching diode 59, the base to collector of the OFF control transistor 5, and the feedback resistor 23 as a charge current path.

As shown in Fig. 2(d), when the electric energy accumulated in the secondary output winding 2c by the induced counterelectromotive force is fully released at time t₁, the voltage waveform (4) of the primary winding 2a on the side of the FET 3 starts free oscillations across the power supply voltage of 200 V as shown by the broken line continuous to the full line of the diagram due to a parasitic capacitance of the FET 3, a stray capacitance in the primary winding 2a, and the inductance of the primary winding 2a. The voltage waveform gradually attenuates from voltage drops with polarity inversions.

As shown by (5) of Fig. 3, the voltage of the first feedback winding 2b on the side of the feedback capacitor 12, oscillating in proportion to the free oscillations of the primary winding voltage, also increases with a reversal of polarity and starts to act as a forward bias voltage on the gate of the FET 3 after t₁ when the flyback voltage having been acted on the gate as a reverse bias disappears. The charge voltage of the feedback capacitor 12 charged so far ((6) of Fig. 3) is also applied so that the gate voltage of the FET 3 exceeds the threshold voltage V_{TH}, and the FET 3 turns on again. A series of continuous self-excited oscillation operations are repeated in this way.

The energy accumulated in the transformer 2 in a single oscillation cycle is almost proportional to the square of the ON operation period from when the FET 3 is turned on to when the base voltage of the OFF control transistor 5 reaches the bias voltage (hereinafter, referred to as ON operation period). In the transient state where the output voltage on the secondary side does not reach the set voltage, the upper limit of the ON operation period (maximum ON time) is controlled almost exactly by the resistance of the shunt resistor 51 and the setting of the maximum primary winding current. More specifically, the primary winding current increases almost in proportion to the elapsed time after the FET 3 is turned on. When the set maximum primary winding current is reached, the FET 3 turns off without delay to set the maximum ON time. The current value of the maximum primary winding current is set so that the energy accumulated in the transformer 2 during the maximum ON time is slightly higher than the energy consumed by the connection of the load of rated power consumption in a single oscillation cycle. The output voltage between the output lines 20a and 20b therefore increases each time the oscillation up to the set voltage is repeated. When the set voltage is exceeded, the constant voltage control circuit to be described below is activated, and a continuous self-excited oscillation operation is performed under constant voltage output control.

When the output voltage between the high-voltage side output line 20a and the low-voltage side output line 20b exceeds the set voltage, the divided voltage of the intermediate tap 32 which is input to the inverting input terminal of the error amplifier 33 also increases. The potential difference from the reference voltage of the reference supply 34 is inverted and amplified, and the photocoupler light-emitting element 35 emits light by an amount corresponding to the differential voltage, the output value. As a result, the photocoupler light-receiving element 39 optically coupled with the photocoupler light-emitting element 35 passes a current by a current value corresponding to the differential voltage from the junction J2 to the junction J3.

In the foregoing continuous self-excited oscillation operation, as shown in Fig. 2(a), the base voltage of the OFF control transistor 5 reaches a bias voltage of 0.6 V at time to when the FET 3 is turned off. In the subsequent OFF operation period, the base voltage is maintained to a voltage at or above the bias voltage while the output voltage on the secondary side is above the set voltage. More specifically, the photocoupler light-emitting element 35 continues being lit on until the energy accumulated in the transformer 2 during the OFF operation period is consumed by the load connected between the output lines 20a and 20b and the output voltage falls below the set voltage. This results in the conduction of the photocoupler light-receiving element 39, so that the flyback voltage occurring in the second feedback winding 2d directly charges the controlling capacitor 53 and the charge voltage raises the base voltage to or above the bias voltage. Even after the disappearance of the flyback voltage, the controlling capacitor 53 is charged with the charge voltage of the driving capacitor 55. At the point in time t2 where the base voltage of the OFF control transistor 5 falls below the bias voltage and the FET 3 turns on, the charge voltage remains slightly below the bias voltage. After the turn-on, the base voltage of the OFF control transistor 5 therefore reaches the bias voltage quickly when the primary winding current increases and a charge current for charging the controlling capacitor 53 flows from the shunt resistor 51 through the switching diode 59.

The FET 3 is thus turned off before the lapse of the set maximum ON time. This reduces the ON operation period, reduces the oscillation-based accumulation of energy in the transformer 2, and lowers the output voltage. On the other hand, if the output voltage falls below the set voltage, the photocoupler light-emitting element 35 will not emit light. The foregoing charge current for charging the controlling capacitor 53 during the OFF operation period is then interrupted by the photocoupler light-receiving element 39. When the FET 3 is turned off, the charge voltage of the controlling capacitor 53 has been lowered by the discharge current flowing through the discharge resistor 52 and the shunt resistor 51. As a result, the ON time the base voltage of the OFF control transistor 5 takes to reach the bias voltage is extended up to the maximum ON time, and the increased on-duty of the FET 3 raises the output voltage. Through such processes, constant voltage control is performed on the output voltage.

While the base voltage of the OFF control transistor 5 reaches the bias voltage in the foregoing OFF operation period, the feedback capacitor 12 is charged with the flyback voltage occurring in the first feedback winding 2b with the emitter to collector of the OFF control transistor 5 and the feedback resister 23 as a charge current path (with the lower electrode being positive and the upper electrode being negative in Fig. 1).

In the self-excited switching power supply circuit 10 according to the present embodiment, the feedback capacitor 12 and the feedback resistor 23 which constitute the ON driving circuit have a time constant 4.7 times as long as that of the conventional self-excited switching power supply circuit 100 in the self-excited oscillation operation. The feedback capacitor 12 is thus charged gently. The time constant of the feedback capacitor 12 and the feedback resistor 23 is determined so that after the energy accumulated in the transformer is released from the secondary output winding 2c at time t₁, the voltage of the first feedback winding 2b on the side of the feedback capacitor 12 ((5) of Fig. 3) starts free oscillations, and when a first maximum value in reverse polarity is reached at time t₂, the charge voltage of the feedback capacitor 12 ((6) of Fig. 3) is applied so that the gate voltage of the FET 3 ((2) of Fig. 3) exceeds the threshold voltage V_{TH}. That is, the time constant is set so that the FET 3 can be turned on at time t₂ when the potential of the foregoing first feedback winding 2b reaches the first maximum value. In Fig. 3, the gate voltage of the FET 3 does not match with the sum of the voltage on the one side of the first feedback winding 2b and the charge voltage of the feedback capacitor 12 because of a voltage drop across the feedback resistor 23.

In the self-excited oscillation operation with the load of rated power consumption connected, the output voltage typically falls below the set voltage during the OFF operation period, in which process the charge current that flows through the photocoupler light-receiving element 39 according to the differential voltage also decreases gradually. A discharge current therefore starts to flow from the controlling capacitor 53 through the discharge resistor 52 and the shunt resistor 51. The discharge rate of this discharge current can be adjusted by the resistance of the discharge resistor 52. The foregoing setting of the resistance as high as 4.7 kΩ makes the base voltage of the OFF control transistor 5 decrease gently so that the base voltage falls below the bias voltage at time t₂ when the turn-on becomes possible.

Consequently, in the self-excited switching power supply circuit 10 with the road of rated power consumption connected to the output lines, the base voltage of the OFF control transistor 5 falls below the bias voltage at time t₂ when the turn-on becomes possible. Since the gate of the FET 3 is insulated from the low-voltage side terminal 1b, the gate voltage of the FET 3 ((2) of Fig. 3) exceeds the threshold voltage V_{TH} to turn on, whereby a continuous self-excited oscillation operation is repeated under constant voltage control.

Here, the first feedback winding 2b and the primary winding 2a make free oscillations with amplitudes proportional to the turns ratios, the amplitudes attenuating gradually. At time t₂ when the positive side of the first feedback winding 2b reaches a first maximum value, the voltage of the primary winding 2a on the side of the FET 3 (the drain of the FET 3) comes to a minimum value. In other words, the FET 3 has a minimum drain voltage of around 120 V (Fig. 2(d)) at time t₂ when the FET 3 is turned on. At turn-on, the drain voltage falls from around 120 V to 0 V and an exciting current starts to flow through the primary winding 2a. Consequently, the charges that have been accumulated in the floating capacitances between windings of the primary winding 2a and in the floating capacitance between the drain and source of the FET 3 by the flyback voltage start to be released at the point in time when the primary winding 2a reverses its polarity for free oscillation. Subsequently, at t₂ when the low-voltage side voltage of the primary winding falls to the minimum, the FET 3 is turned on to make a short circuit to the low-voltage side terminal 1b of the direct-current power supply 1, which makes the discharge current gentle. As a result, only a slight discharge current appears as the primary winding current immediately after turn-on, causing not much loss in the switch elements such as the FET 3 and not much noise.

### (Standby Operation without a Load)

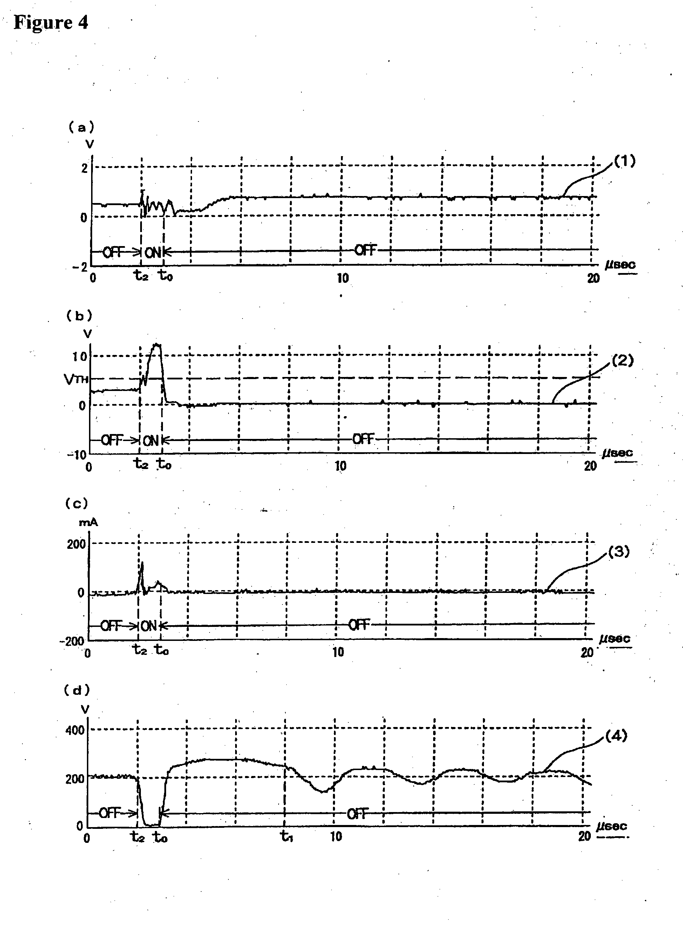

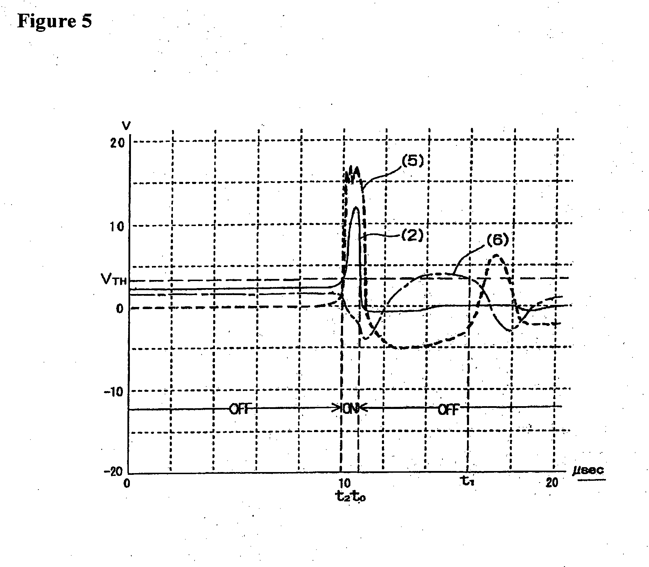

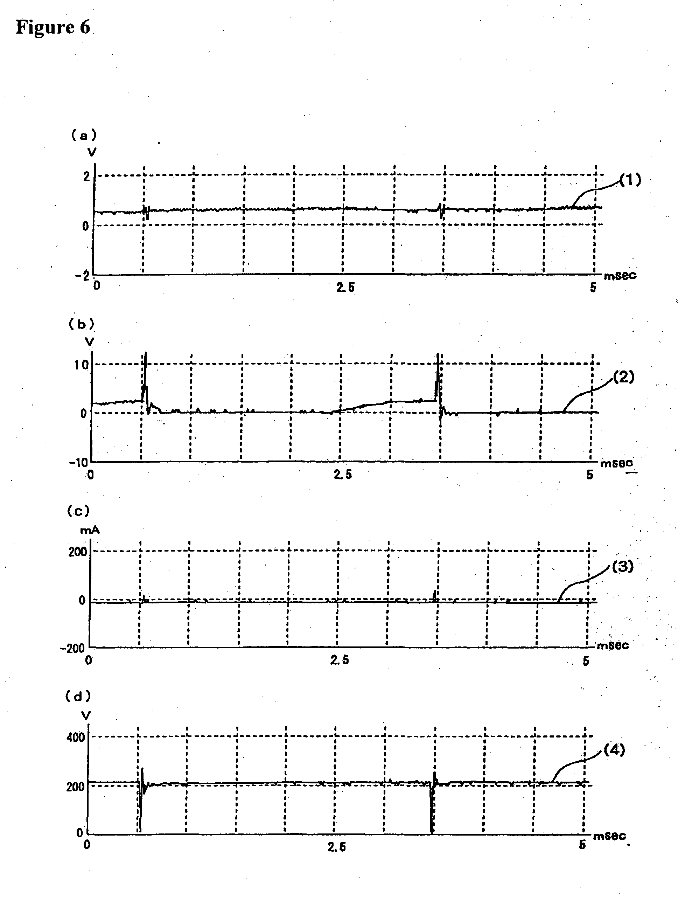

Next, the operation of the self-excited switching power supply circuit 10 on standby when no load is connected between the high-voltage side output line 20a and the low-voltage side output line 20b will be described with reference to Figs. 4 to 7. Corresponding to Figs. 2 and 3, Figs. 4 and 5 show the waveforms of various parts of the self-excited switching power supply circuit 10 that is making an intermittent oscillation operation on standby without a load. Fig. 4(a) shows the waveform of the base voltage (1) of the OFF control transistor 5; Fig. 4(b) the waveform of the gate voltage (2) of the FET 3; Fig. 4(c) the waveform of the primary winding current (3) that flows through the primary winding 2a; and Fig. 4(d) the waveform of the drain voltage (4) of the FET 3. The voltage waveforms shown by (2), (5), and (6) of Fig. 5 are: the waveform of the gate voltage (2) of the FET 3; the waveform of the voltage (5) of the feedback capacitor 12 on the side of the first feedback winding 2b; and the waveform of the charge voltage (6) of the feedback capacitor 12 with respect to the voltage on the side of the first feedback winding 2b. Fig. 6 is a waveform chart showing the waveforms in an extended time span, with the horizontal axes or time axes of the respective charts shown in Fig. 4 reduced to 1/250.

Among the operations of the self-excited switching power supply circuit 10 on standby without a load, the basic continuous self-excited oscillation operations have been described above. Common operations will thus be omitted, and the description will be concentrated on operations that differ from when a load of rated power consumption is connected.

When no load is connected between the output lines 20a and 20b, the energy accumulated in the transformer 2 by oscillations will not be consumed by a load. Even after the FET 3 is turned off to enter an OFF operation period, the output voltage therefore falls gently. The differential voltage with respect to the set voltage thus remains high even at the point in time where free oscillations are started (t1 in Figs. 4 and 5). Consequently, the flyback voltage of the second feedback winding 2d passes a charge current for charging the controlling capacitor 53 through the photocoupler light-receiving element 39. The base voltage of the OFF control transistor 5 maintains a voltage at or above the bias voltage.

After t1 when the energy accumulated in the transformer 2 disappears, the energy consumption of various circuit elements brings the output voltage close to the set voltage. The allowable current of the photocoupler light-receiving element 39 decreases with the differential voltage, and is completely shut off below the set voltage. A discharge current therefore flows from the controlling capacitor 53, which is no longer charged from the second feedback winding 2d, through the discharge resistor 52 and the shunt resistor 51.

If the differential voltage between the output voltage and the set voltage remains high even after t1 when the energy accumulated in the transformer 2 disappears, the flyback voltage of the second feedback winding 2d gradually attenuates with polarity inversions. The controlling capacitor 53 is charged through the photocoupler light-receiving element 39 from the driving capacitor 55 which is charged with the flyback voltage. Subsequently, when the charge voltage of the driving capacitor 55 falls to match with the charge voltage of the controlling capacitor 53, a discharge current flows from the controlling capacitor 53 through the discharge resistor 52 and the shunt resistor 51.

The discharge resistor 52 has a resistance of 4.7 kΩ as compared to the resistance of the conventional charge and discharge resistor 50 of 100 Ω. Ignoring the resistance of the switching diode 59 which is connected in parallel with the shunt resistor 51 of 2.4 Ω, the discharge resistance 52 and the controlling capacitor 53 constitute a delay circuit having a time constant approximately 47 times the conventional value. Consequently, in either of the cases where the controlling capacitor 53 is discharged, the discharge voltage of the controlling capacitor 53 falls extremely gently.

Consequently, the base voltage of the OFF control transistor 5 maintains a voltage at or above the bias voltage (see Fig. 4(a)) for a sufficiently long time after the output voltage falls below the set voltage. Even when it comes to the time where the FET 3 could be turned on for continuous self-excited oscillations under a load of rated power consumption, the collector and emitter of the OFF control transistor 5 are conducting and the FET 3 will not be turned on. That is, the self-excited switching power supply circuit 10 makes an intermittent oscillation operation.

When the base voltage of the OFF control transistor 5 falls below the bias voltage due to the discharge of the controlling capacitor 53, the junction J1 in connection with the gate of the FET 3 is insulated from the low-voltage side terminal 1b, which allows the FET 3 to turn on. If at this point in time the gate voltage, which is the sum of the charge voltage of the feedback capacitor 12 of the ON driving circuit and the voltage of the first feedback winding 2b on the side of the feedback capacitor 12, exceeds the threshold voltage V_{TH} of the FET 3, the FET 3 is simply turned on.

Since the voltage of the first feedback winding 2b freely oscillates with attenuation ((5) of Fig. 5), it may not reach the threshold voltage V_{TH} of the FET 3 even with the addition of the charge voltage of the feedback capacitor 12. In such a case, the feedback capacitor 12 is charged through the starting resistor 21 until the threshold voltage V_{TH} is reached, and then the FET 3 is turned on.

As shown in Fig. 4(a), at the point in time t2 where the FET 3 is turned on, the controlling capacitor 53 has been charged with the flyback voltage of the second feedback winding 2d or the charge voltage of the driving capacitor 55 during the OFF operation period. The base voltage of the OFF control transistor 5 is only slightly lower than the bias voltage. An increase in the primary winding current by turn-on is thus immediately followed by turn-off before the lapse of the maximum ON time.

That is, if without a load, as shown in Fig. 4, the turn-off occurs after an extremely short ON operation period that corresponds to the power consumption of the self-excited switching power supply circuit 10 itself, whereby the same intermittent oscillation operation is repeated.

The foregoing description has dealt with the intermittent oscillation operation without a load. When a light load with small power consumption is connected between the output lines 20a and 20b, similar intermittent oscillation operations are performed with ON and OFF operation periods appropriate to the power consumption.

When a load of rated power consumption is connected, the self-excited switching power supply circuit 10 according to the present embodiment repeats a continuous self-excited oscillation operation at cycles of approximately 14 µsec as shown in Fig. 2. On standby without a load, the self-excited switching power supply circuit 10 repeats an intermitted oscillation operation at cycles of approximately 2.9 msec as shown in Fig. 6. The smaller number of times of switching per unit time significantly reduces the standby power consumption.

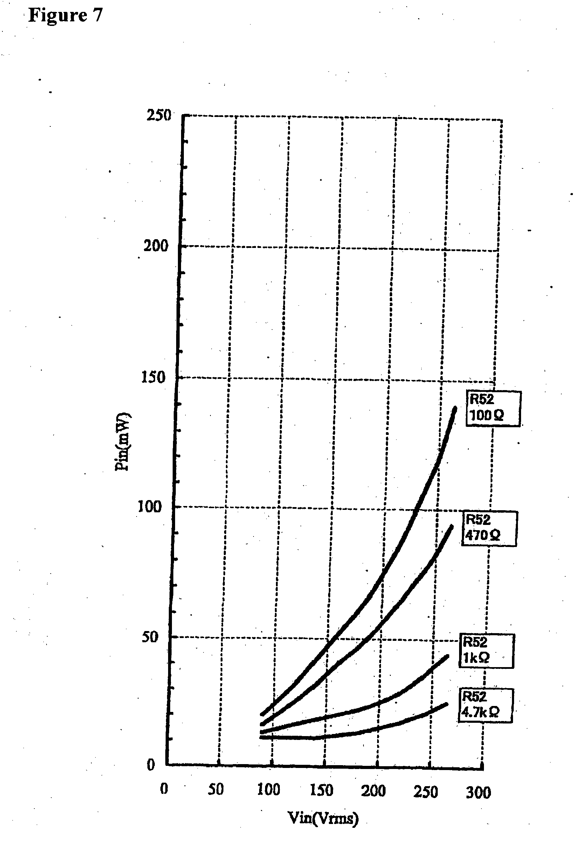

Fig. 7 shows the relationship between various input voltages (Vin) and the power consumption on no-load standby with different resistances of the discharge resistor 52 according to the present invention. As shown in the chart, according to the present invention, the parallel connection of the switching diode 59 allows the discharge resistor 52 to have a high resistance of 4.7 kΩ irrespective of the input voltage (Vin). As compared to the case with the conventional charge and discharge resistor 50 having a resistance of 100 Ω, it is possible to reduce the standby power consumption significantly.

In the foregoing embodiment, the driving capacitor 55 or the controlling capacitor 53 is charged with the flyback voltage in the second feedback winding 2b which is arranged on the transformer 2 aside from the first feedback winding 2a. Nevertheless, such capacitors may be charged with a flyback voltage that occurs in another winding of the transformer 2, without using the second feedback winding 2b.

In the foregoing embodiment, the constant voltage control circuit that passes a charge current for charging the controlling capacitor 53 from a winding where a flyback voltage occurs or from the driving capacitor 55 according to the differential voltage between the output voltage and the set voltage if the output voltage exceeds the set voltage is composed of the error amplifier 33 which compares the output voltage and the set voltage, the photocoupler light-emitting element 35, and the photocoupler light-receiving element 39. These circuit elements are not indispensable and may be replaced with other circuit elements.

Moreover, the OFF control transistor 5 is not limited to an NPN transistor and may be made of other switching elements.

### Industrial Applicability

The present invention is suitable for a switching power supply circuit which outputs an unstable direct-current power supply as a stable output voltage.

### Description of Reference Numeral

- 1: direct-current power supply
- 1a: high-voltage side terminal
- 1b: low-voltage side terminal
- 2: transformer
- 2a: primary winding
- 2b: feedback winding (first feedback winding)
- 2c: secondary output winding
- 2d: feedback winding (second feedback winding)
- 3: field-effect transistor for oscillation
- 5: OFF control transistor (driver element)
- 10: self-excited switching power supply circuit
- 12: feedback capacitor (ON driving circuit)
- 21: starting resistor
- 23: feedback resistor (ON driving circuit)
- 51: shunt resistor
- 52: discharge resistor
- 53: controlling capacitor
- 55: driving capacitor
- 59: switching diode

## Claims

1. A self-excited switching power supply circuit (10), comprising:
a transformer (2) that has a primary winding (2a), a secondary output winding (2c), and at least one or more feedback windings (2b, 2d);
a field-effect transistor (3) for oscillation that is connected to a direct-current power supply (1) so as to be in series with the primary winding (2a), and makes an ON operation while its gate voltage is at or above a threshold voltage V_{TH};
a starting resistor (21) that is connected between a high-voltage side terminal of the direct-current power supply (1) and a gate of the field-effect transistor (3);
an ON driving circuit that includes a feedback capacitor (12) and a feedback resistor (23) which are connected in series between the feedback winding(s) (2b, 2d) and the gate of the field-effect transistor (3);
a driver element (5) that is connected between the gate of the field-effect transistor (3) and a low-voltage side terminal of the direct-current power supply (1), and brings the gate and the low-voltage side terminal into conduction to make the field-effect transistor (3) perform an OFF operation while its control terminal voltage is at or above an operating voltage;
a shunt resistor (51) that is connected between the field-effect transistor and the low-voltage side terminal;
a discharge resistor (52) that is connected between a control terminal of the driver element (5) and a junction between the field-effect transistor (3) and the shunt resistor (51);
a controlling capacitor (53) that is connected between the control terminal of the driver element (5) and the low-voltage side terminal directly without any element connected in parallel to the controlling capacitor (53), is charged to raise the control terminal voltage to or above the operating voltage with a voltage of the shunt resistor (51) through which an exciting current of the primary winding (2a) flows in an ON operation period, and is discharged only through the discharge resistor (52) and the shunt resistor (51) to lower the control terminal voltage below the operating voltage in an OFF operation period; and
a constant voltage control circuit that compares an output voltage with a predetermined set voltage, and passes a charge current for charging the controlling capacitor (53) from any one of the windings of the transformer where a flyback voltage occurs or a driving capacitor (55) charged with a flyback voltage according to a differential voltage between the output voltage and the set voltage if the output voltage exceeds the set voltage, the output voltage being obtained by rectifying and smoothing a flyback voltage occurring in the secondary output winding (2c) of the transformer (2);
after the field-effect transistor (3) is turned on and while the output voltage is higher than the set voltage, a charge voltage of the driving capacitor (55) being applied to the control terminal to which the voltage of the shunt resistor (51) the exciting current of the primary winding (2a) is flowing through is applied, whereby the ON operation period before the driver element (5) turns off the field-effect transistor (3) is reduced;
after the field-effect transistor (3) is turned off and while the output voltage is higher than the set voltage, the controlling capacitor (53) being charged from any one of the windings of the transformer (2) where a flyback voltage occurs or the driving capacitor (55) so that the control terminal voltage is maintained at or above the operating voltage, whereby turning-on of the field-effect transistor (3) is suppressed to extend the OFF operation period;
wherein a switching diode (59) is connected between the control terminal of the driver element (5) and a junction between the field-effect transistor (3) and the shunt resistor (51) so as to be in parallel with the discharge resistor (52) with its forward direction from the junction to the control terminal, the controlling capacitor (53) being charged through the switching diode (59) by the voltage at the field-effect transistor (3) side of the shunt resistor (51), such that the charge voltage of the controlling capacitor (53) increases with a quick response to the current increase of the primary winding (2a).

2. The self-excited switching power supply circuit (10) according to clam 1, wherein the resistance of the discharge resistor (52) is set so that the charge voltage of the controlling capacitor (53) falls below the operating voltage when energy accumulated in the transformer (2) is released from the secondary output winding (2c) and the feedback winding(s) (2b, 2d) freely oscillating reaches a first maximum value in voltage, with a load of rated power consumption connected to the secondary output winding (2c).

3. The self-excited switching power supply circuit (10) according to clam 1 or 2, wherein the driver element (5) is an NPN transistor that is connected at its collector to the gate of the field-effect transistor (3), at its emitter to the low-voltage side terminal, and at its base to the control terminal; and the feedback capacitor (12) to be charged with the flyback voltage occurring in the feedback winding(s) (2b, 2d) of the transformer (2) is charged with a charge current that flows through the switching diode (59) and the base to collector of the NPN transistor in the OFF operation period.

## Patentansprüche

1. Selbsterregtes Schaltnetzteil (10), aufweisend:
einen Transformator (2), der eine primäre Wicklung (2a), eine sekundäre Ausgangswicklung (2c) und mindestens eine oder mehrere Rückkopplungswicklungen (2b, 2d) aufweist;
einen Feldeffekttransistor (3) für Oszillation, der mit einer Gleichstromversorgung (1) verbunden ist, um in Serie mit der primären Wicklung (2a) zu sein, und eine EIN-Operation ausführt, während seine Gatespannung bei oder oberhalb einer Grenzwertspannung V_{TH} ist;
einen Anlaufwiderstand (21) der zwischen einem hochspannungsseitigen Anschluss der Gleichstromversorgung (1) und einem Gate des Feldeffekttransistors (3) verbunden ist;
eine EIN-Treiberschaltung, die einen Rückkoppelkondensator (12) und einen Rückkoppelwiderstand (23) beinhaltet, die in Serie zwischen der/den Rückkoppelwindung/Rückkoppelwindungen (2b, 2d) und dem Gate des Feldeffekttransistors (3) verbunden sind;
ein Treiberelement (5) das zwischen dem Gate des Feldeffekttransistors (3) und einem niederspannungsseitigen Anschluss der Gleichstromversorgung (1) verbunden ist und das Gate und den niederspannungsseitigen Anschluss leitend macht, um den Feldeffekttransistor (3) zu veranlassen eine AUS-Operation auszuführen, während seine Steueranschlussspannung bei oder oberhalb einer Operationsspannung ist;
einen Shunt (51), der zwischen dem Feldeffekttransistor und dem niederspannungsseitigen Anschluss verbunden ist;
einen Entladewiderstand (52), der zwischen einem Steueranschluss des Treiberelements (5) und einer Verbindung zwischen dem Feldeffekttransistor (3) und dem Shunt (51) verbunden ist;
einen Steuerkondensator (53), der zwischen dem Steueranschluss des Treiberelements (5) und dem niederspannungsseitigen Anschluss direkt verbunden ist, ohne dass irgend ein Element parallel mit dem Steuerkondensator (53) verbunden ist und, um die Steueranschlussspannung auf oder über die Operationsspannung zu erhöhen, mit einer Spannung des Shunts (51) geladen wird, durch den ein Erregungsstrom der primären Wicklung (2a) in einer Ein-Operationsperiode fließt, und nur durch den Entladewiderstand (52) und den Shunt (51) entladen wird, um die Steueranschlussspannung unter die Operationsspannung in einer AUS-Operationsperiode zu verringern; und
eine Konstantspannungssteuerschaltung, die eine Ausgangsspannung mit einer vorbestimmten, festgelegten Spannung vergleicht und einen Ladestrom zum Laden des Steuerkondensators (53) von irgendeiner der Wicklungen des Transformators, wo eine Rücklaufspannung auftritt oder einem Treiberkondensator (55), der mit einer Rücklaufspannung gemäß einer differentiellen Spannung zwischen der Ausgangsspannung und der festgelegten Spannung geladen ist, wenn die Ausgangsspannung die festgelegte Spannung überschreitet, durchlässt, wobei die Ausgangsspannung durch Gleichrichten und Glätten einer Rücklaufspannung, die in der sekundären Wicklung (2c) des Transformators (2) auftritt, erlangt wird;
wobei nachdem der Feldeffekttransistor (3) eingeschaltet ist und während die Ausgangsspannung höher als die festgelegte Spannung ist, eine Ladespannung des Treiberkondensators (55), an den Steueranschluss angelegt wird, an dem die Spannung des Shunts (51), durch den der Erregungsstrom der primären Wicklung (2a) fließt, anliegt, wobei die EIN-Operationsperiode bevor das Treiberelement (5) den Feldeffekttransistor (3) aufschaltet, reduziert wird;
wobei nachdem der Feldeffekttransistor (3) ausgeschaltet ist und während die Ausgangsspannung höher als die festgelegte Spannung ist, der Steuerkondensator (53) von irgendeiner der Wicklungen des Transformators (2), wo eine Rücklaufspannung auftritt oder dem Treiberkondensator (55) geladen wird, so dass die Steueranschlussspannung bei oder oberhalb der Operationsspannung aufrechterhalten wird, wobei Einschalten des Feldeffekttransistors (3) unterdrückt wird, um die AUS-Operationsperiode zu erweitern;
wobei eine Schaltdiode (59) zwischen dem Steueranschluss des Treiberelements (5) und einer Verbindung zwischen dem Feldeffekttransistor (3) und dem Shunt (51) verbunden ist, um parallel zum Entladewiderstand (53)zu sein, wobei ihre Vorwärtsrichtung von der Verbindung zum Steueranschluss ist, wobei der Steuerkondensator (53) durch die Schaltdiode (59) durch die Spannung auf der Seite des Feldeffekttransistors (3) des Shunts (51) geladen wird, so dass die Ladespannung des Steuerkondensators (53) mit einer schnellen Antwort auf den Stromanstieg der primären Wicklung (2a) zunimmt.

2. Selbsterregtes Schaltnetzteil (10) gemäß Anspruch 1, wobei der Widerstandswert des Entladewiderstands (52) so festgelegt wird, dass die Ladespannung des Steuerkondensators (53) unterhalb die Operationsspannung fällt, wenn Energie, die in dem Transformator (2) angesammelt ist, von der sekundären Ausgangswicklung (2c) freigegeben wird und die frei oszillierende/oszillierenden Rückkoppelwicklung/Rückkoppelwicklungen (2b, 2d) einen ersten maximalen Spannungswert erreicht/erreichen, wobei eine Last mit einem Nennenergieverbrauchs mit der sekundären Ausgangswicklung (2c) verbunden ist.

3. Selbsterregtes Schaltnetzteil (10) gemäß Anspruch 1 oder 2, wobei das Treiberelement (5) ein NPN-Transistor ist, der an seinem Kollektor mit dem Gate des Feldeffekttransistors (3), an seinem Emitter mit dem niederspannungsseitigen Anschluss und an seiner Basis mit dem Steueranschluss verbunden ist; und der Rückkoppelkondensator (12), der mit der Rücklaufspannung, die in der/den Rückkoppelwicklung/Rückkoppelwicklungen (2B, 2d) des Transformators auftritt/auftreten, zu laden ist, mit einem Ladestrom geladen wird, der durch die Schaltdiode (59) und die Basis zum Kollektor des NPN-Transistors in der AUS-Operationsperiode fließt.

## Revendications

1. Circuit d'alimentation à commutation et à auto-excitation (10), qui comprend :
un transformateur (2) qui possède un enroulement primaire (2a), un enroulement de sortie secondaire (2c), et au moins un enroulement de réaction ou plus (2b, 2d) ;
un transistor à effet de champ (3) destiné à l'oscillation, qui est relié à une alimentation en courant continu (1) de façon à être en série avec l'enroulement primaire (2a), et qui effectue une opération de mise en marche lorsque sa tension de grille est égale ou supérieure à une tension de seuil V_{TH} ;
une résistance de démarrage (21) qui est reliée entre une borne à haute tension de l'alimentation en courant continu (1) et une grille du transistor à effet de champ (3) ;
un circuit d'entraînement et de mise en marche qui comprend un condensateur de réaction (12) et une résistance de réaction (23) qui sont reliés en série entre le(s) enroulement(s) de réaction (2b, 2d) et la grille du transistor à effet de champ (3) ;
un élément d'entraînement (5) qui est relié entre la grille du transistor à effet de champ (3) et une borne à basse tension de l'alimentation en courant continu (1), et rend la grille et la borne à basse tension conductrices de façon à ce que le transistor à effet de champ (3) effectue une opération d'arrêt lorsque la tension de sa borne de commande est égale ou supérieure à une tension de fonctionnement ;
une résistance shunt (51) qui est reliée entre le transistor à effet de champ et la borne à basse tension ;
une résistance de décharge (52) qui est reliée entre une borne de commande de l'élément d'entraînement (5) et une jonction comprise entre le transistor à effet de champ (3) et la résistance shunt (51) ;
un condensateur de commande (53) qui est relié entre la borne de commande de l'élément d'entraînement (5) et la borne à basse tension de manière directe, sans aucun élément relié en parallèle au condensateur de commande (53), qui est chargé afin d'augmenter la tension de commande à un niveau supérieur ou égal à la tension de fonctionnement à l'aide d'une tension de la résistance shunt (51) grâce à laquelle un courant d'excitation de l'enroulement primaire (2a) circule pendant une opération de mise en marche, et qui est déchargé uniquement par la résistance de décharge (52) et la résistance shunt (51) afin de réduire la tension de la borne de commande au-dessous de la tension de fonctionnement pendant une opération d'arrêt ; et
un circuit de commande de tension constante qui compare une tension de sortie avec une tension de consigne, et transmet un courant de charge destiné à charger le condensateur de commande (53) à l'aide de n'importe lequel des enroulements du transformateur dès qu'une tension de retour se produit ou d'un condensateur d'entraînement (55) chargé avec une tension de retour en fonction d'une tension différentielle comprise entre la tension de sortie et la tension de consigne si la tension de sortie dépasse la tension de consigne, la tension de sortie étant obtenue en rectifiant et en lissant une tension de retour qui se produit dans l'enroulement de sortie secondaire (2c) du transformateur (2) ;
une fois que le transistor à effet de champ (3) est enclenché et lorsque la tension de sortie est supérieure à la tension de consigne, une tension de charge du condensateur d'entraînement (55) est appliquée à la borne de commande à laquelle est appliquée la tension de la résistance shunt (51) par laquelle passe le courant d'excitation de l'enroulement primaire (2a), moyennant quoi la période d'opération de mise en marche qui précède le moment auquel l'élément d'entraînement (5) éteint le transistor à effet de champ (3) est réduite ;
une fois que le transistor à effet de champ (3) est éteint et lorsque la tension de sortie est supérieure à la tension de consigne, le condensateur de commande (53) est chargé par n'importe lequel des enroulements du transformateur (2) dans lequel se produit une tension de retour, ou par le condensateur d'entraînement (55), afin que la tension de la borne de commande soit maintenue à un niveau égal ou supérieur à la tension de fonctionnement, moyennant quoi la mise en marche du transistor à effet de champ (3) est supprimée afin de prolonger la période d'opération d'arrêt ;
dans lequel une diode de commutation (59) est reliée entre la borne de commande de l'élément d'entraînement (5) et une jonction comprise entre le transistor à effet de champ (3) et la résistance shunt (51) de façon à être en parallèle avec la résistance de décharge (52), avec sa direction avant comprise entre la jonction et la borne de commande, le condensateur de commande (53) étant chargé par le biais de la diode de commutation (59), par la tension présente au niveau du transistor à effet de champ (3) de la résistance shunt (51), de sorte que la tension de charge du condensateur de commande (53) augmente avec une réponse rapide à l'augmentation de courant de l'enroulement primaire (2a).

2. Circuit d'alimentation à commutation et à auto-excitation (10) selon la revendication 1, dans lequel la résistance de la résistance de décharge (52) est réglée de sorte que la tension de charge du condensateur de commande (53) chute au-dessous de la tension de fonctionnement dès que l'énergie accumulée dans le transformateur (2) est libérée par l'enroulement de sortie secondaire (2c) et le(s) enroulement(s) de réaction (2b, 2d) qui oscille(nt) librement, et atteint une première valeur maximale, avec une charge de consommation de puissance nominale reliée à l'enroulement de sortie secondaire (2c).

3. Circuit d'alimentation à commutation et à auto-excitation selon la revendication 1 ou 2, dans lequel l'élément d'entraînement (5) est un transistor NPN qui est relié, au niveau de son collecteur, à la grille du transistor à effet de champ (3), au niveau de son émetteur, à la borne à basse tension, et, au niveau de sa base, à la borne de commande ; et le condensateur de réaction (12) à charger avec la tension de retour qui se produit dans le(s) enroulement(s) de réaction (2b, 2d) du transformateur (2) est chargé avec un courant de charge qui circule dans la diode de commutation (59) et la base vers le collecteur du transistor NPN pendant l'opération d'arrêt.
